# EUROPEAN PATENT APPLICATION

(11) **EP 2 977 920 A1**
(43) Date of publication of application: **27.01.2016**
(21) Application number: 15175708.5
(22) Date of filing: 07.07.2015
(51) Int. Cl.: G06F 17/30

(54) **TIME-ASSOCIATED DATA BROWSING METHODS AND SYSTEMS**

(30) Priority: 24.07.2014 TW 103125227
(71) Applicant: Noodoe Corporation, Taipei City 115 (TW)
(72) Inventor: WANG, John C., 115 Taipei City (TW)
(74) Representative: Karakatsanis, Georgios

(57) **Abstract**

Time-associated data browsing methods and systems (100) are provided. First, a current time is obtained. A first data set is determined from a plurality of data sets according to the current time, and the content of the first data set is displayed, wherein each data set includes time data and content. Then, a first instruction is received. In response to the first instruction, a second data set is determined from the data sets, and the content of the second data set is displayed.

## Description

### BACKGROUND

### Technical Field

The disclosure relates generally to data browsing methods and systems, and, more particularly to methods and systems for browsing time-associated data.

### Description of the Related Art

Recently, electronic devices, such as smart phones, tablets, notebooks, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

An electronic device typically has a display unit, and users can browse data via the display unit. Generally, the size of the display unit is sufficient for browsing all kinds of data. When the data cannot be completely displayed in the display unit, a user can scroll a user interface to view other portions of the data via an input tool, such as a touch-sensitive screen provided by the electronic device.

Furthermore, with the coming of IOT (Internet Of Things) generation, every device or object can connect to networks, and users can access and control these devices or objects via networks. Currently, wearable electronic devices have become the most tangible applications of IOT. In some cases, the wearable device can detect health information of a user, record exercise information and sleep patterns, or display email messages or incoming calls. Generally, the wearable device has a display unit with a limited size, such as a resolution of 32x128, and not all of the wearable devices can provide the input unit, such as the touch-sensitive screen. While it is inconvenient for users to view data via wearable devices, oftentimes it is difficult for data scrolling/switching.

### SUMMARY

Time-associated data browsing methods and systems are provided, wherein data sets with time-association can be browsed and switched in an electronic device according to the current time.

In an embodiment of a time-associated data browsing method, a current time is obtained. A first data set is determined from a plurality of data sets according to the current time, and the content of the first data set is displayed, wherein each data set includes time data and content. Then, a first instruction is received. In response to the first instruction, a second data set is determined from the data sets, and the content of the second data set is displayed.

An embodiment of a time-associated data browsing system comprises a display unit and a processing unit. The processing unit obtains a current time, and determines a first data set from a plurality of data sets according to the current time, and displays the content of the first data set via the display unit, wherein each data set includes time data and content. The processing unit receives a first instruction. In response to the first instruction, the processing unit determines a second data set from the data sets, and displays the content of the second data set via the display unit.

In some embodiments, the time data of the first data set is later than the current time, and the time data of the second data set is later than the time data of the first data set. The time data of the first data set is closest to the current time than other data sets, and the time data of the second data set is closest to the time data of the first data set than other data sets.

In some embodiments, an orientation of an electronic device is detected by at least one sensor. It is determined whether the orientation of the electronic device matches with or substantially matches with a specific orientation. When the orientation of the electronic device matches with or substantially matches with the specific orientation, the first instruction is generated.

In some embodiments, a movement of an electronic device is detected by at least one sensor. It is determined whether the movement of the electronic device matches with or substantially matches with a specific movement. When the movement of the electronic device matches with or substantially matches with the specific movement, the first instruction is generated.

In some embodiments, the movement indicates that the electronic device substantially rotates in a first direction around a specific axis. In some embodiments, a second instruction is received, wherein the second instruction is generated when the electronic device substantially rotates in a second direction around the specific axis. In response to the second instruction, the determined data set is changed from the second data set to the first data set, and the content of the first data set is displayed.

In some embodiments, the data sets record calendar data, weather data, and/or shift table data corresponding to at least one specific date.

In some embodiments, one of the data sets is displayed in the display unit at a time.

In some embodiments, the content of the second data set scrolls across the display unit, such that the content of the second data set is completely displayed in the display unit.

Time-associated data browsing methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a time-associated data browsing system of the invention;
Fig. 2A shows an example of data sets with time-associations of the invention;
Fig. 2B shows another example of data sets with time-associations of the invention;
Fig. 3 is a flowchart of an embodiment of a time-associated data browsing method of the invention;
Fig. 4 is a flowchart of another embodiment of a time-associated data browsing method of the invention;
Fig. 5 is a schematic diagram illustrating an example of an electronic device rotating around a specific axis;
Figs. 6A, 6B and 6C are schematic diagrams illustrating an embodiment of an example for time-associated data browsing of the invention; and
Figs. 7A, 7B and 7C are schematic diagrams illustrating an embodiment of another example for time-associated data browsing of the invention.

### DETAILED DESCRIPTION OF THE INVENTION

Time-associated data browsing methods and systems are provided.

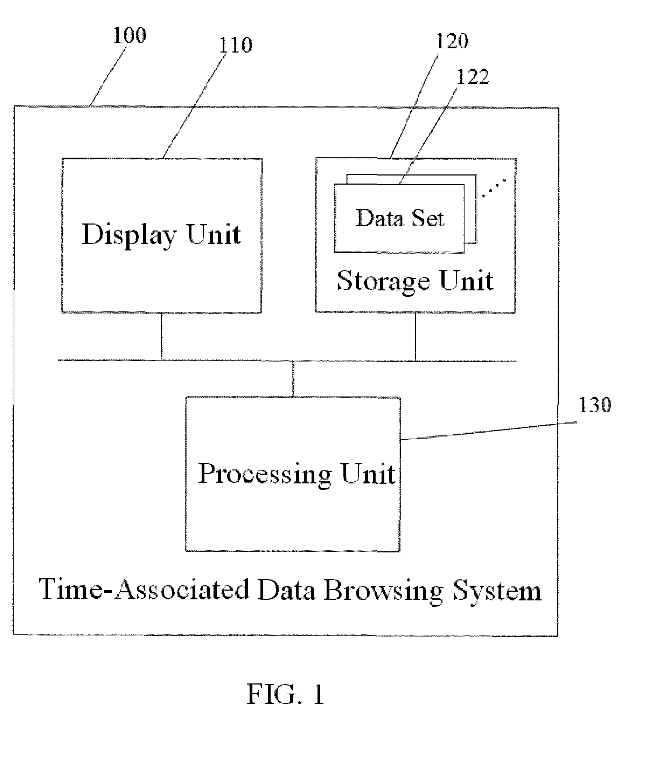

Fig. 1 is a schematic diagram illustrating an embodiment of a time-associated data browsing system of the invention. The time-associated data browsing system 100 can be used in an electronic device. In some embodiments, the electronic device may be a portable device, such as a mobile phone, a smart phone, a PDA (Personal Digital Assistant), a GPS (Global Positioning System), a notebook, a tablet computer, or a wearable device.

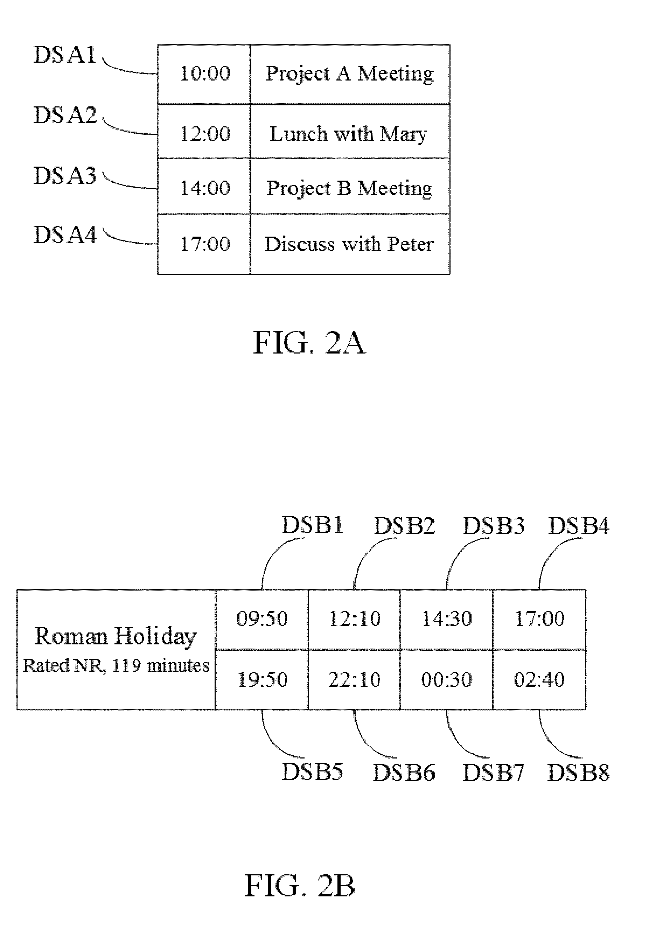

The time-associated data browsing system 100 comprises a display unit 110, a storage unit 120, and a processing unit 130. The display unit 110 can display related information, such as images, interfaces, and/or related data. The storage unit 120 can comprise a plurality of data sets. It is understood that, in some embodiments, each data set can comprise time data and content. That is the data sets are time-associated. It is understood that, in some embodiments, the data set records calendar data, weather data, and/or shift table data corresponding to at least one specific date. Fig. 2A shows an example of data sets with time-association of the invention. In the example of Fig. 2A, the data sets are calendar data. Each event in the calendar can be regarded as a data set. In the example, the calendar data has 4 data sets DSA1∼DSA4. It is noted that, since the data sets are time-associated, the sequence of the corresponding events can be known according to the time data corresponding to the respective data sets. It is noted that, in some embodiments, the data sets can be weather forecast data for respective hours. Fig. 2B shows another example of data sets with time-association of the invention. In the example of Fig. 2B, the data sets are showing time data for a movie. Each showing time can be regarded as a data set. In the example, the showing time data has 8 data sets DSB1∼DSB8. Similarly, since the data sets are time-associated, the sequence of the showings of the movie can be known according to the time data corresponding to the respective data sets. It is noted that, in some embodiments, the data set is schedule data of a transportation tool. It is noted that, the above data sets are examples of the application, and the present invention is not limited thereto. As described, the display unit 110 can display related information. In some embodiments, when the display unit 110 has a limited size, one of the data sets can be displayed in the display unit 110 at a time. The processing unit 130 can control related operations of hardware and software in the electronic device, and perform the time-associated data browsing methods of the invention, which will be discussed later.

It is understood that, in some embodiments, the time-associated data browsing system 100 can comprise at least one sensor (not shown in Fig. 1) for detecting the orientation of an electronic device. In some embodiments, the sensor may be an accelerometer such as a G-sensor for generating information of velocity and displacement when the electronic device moves. In some embodiments, the sensor may be a Gyro sensor for generating information of angular acceleration when the electronic device moves. In some embodiments, the sensor may be a compass for detecting an angle between an electronic device and a geographical direction, such as a direction of the North Pole or the South Pole. It is understood that, the above sensors are examples of the application, and the present invention is not limited thereto. Any sensor which can detect the orientation of an electronic device can be applied in the present invention. As described, the sensor can detect the orientation of the electronic device. It is noted that, in some embodiments, the orientation comprises angle information corresponding to the electronic device in reference to at least one reference point. In some embodiments, the orientation can be represented as an included angle between an axis which is vertical to at least one plane of the electronic device and a specific direction, such as the direction of gravity or the geographical direction.

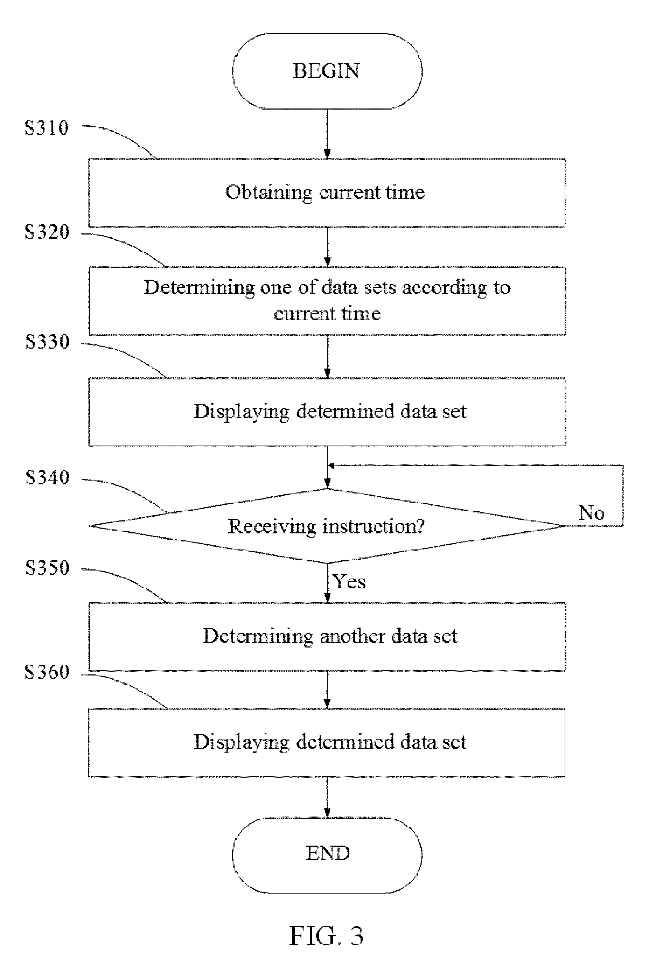

Fig. 3 is a flowchart of an embodiment of a time-associated data browsing method of the invention. The time-associated data browsing method of the invention can be used in an electronic device, such as a mobile phone, a smart phone, a PDA, a GPS, a notebook, a tablet computer, a wearable device, or other portable devices.

In step S310, the current time is obtained. Then, in step S320, a data set is determined from a plurality of data sets according to the current time, and in step S330, the content of the determined data set is displayed. As described, each data set is time-associated, and each data set includes time data and content. It is understood that, in some embodiments, the time data of the data set can be also displayed in the display unit with the content of the data set. It is understood that, in some embodiments, the content of the data set is scrolled in the display unit, such that the content of the data set is completely displayed in the display unit. It is noted that, in some embodiments, one of the data sets is displayed in the display unit at a time. It is understood that, in some embodiments, the time data of the determined data set is later than or close to the current time, and the time data of the determined data set is closest to the current time than other data sets. In step S340, it is determined whether an instruction is received. It is noted that, the instruction can be predefined in the electronic device. It is understood that, in some embodiments, the received instruction can comprise an orientation, a movement of the electronic device, a tap on the electronic device, a sound, a trigger corresponding to a button, an appearance corresponding to an object, and/or a touch on a touch-sensitive device. It is understood that, in some embodiments, an orientation and/or a movement corresponding to the electronic device can be detected via at least one sensor. It is determined whether the orientation of the electronic device matches with or substantially matches with a specific orientation, or whether the movement of the electronic device matches with or substantially matches with a specific movement. When the orientation of the electronic device matches with or substantially matches with the specific orientation, or when the movement of the electronic device matches with or substantially matches with the specific movement, the instruction is generated. It is noted that, the above instructions are examples of the application, and the present invention is not limited thereto. When the instruction is not received (No in step S340), the procedure remains at step S340. When the instruction is received (Yes in step S340), in step S350, another data set is determined from the data sets, and in step S360, the content of the determined data set is displayed. Similarly, in some embodiments, the time data of the data set can be also displayed in the display unit with the content of the data set. In some embodiments, the content of the data set is scrolled in the display unit, such that the content of the data set is completely displayed in the display unit. In some embodiments, one of the data sets is displayed in the display unit at a time. It is understood that, in some embodiments, the time data of the data set determined in step S350 is later than the time data of the data set determined in step S320, and the time data of the data set determined in step S350 is closest to the time data of the data set determined in step S320 than that of the other data sets.

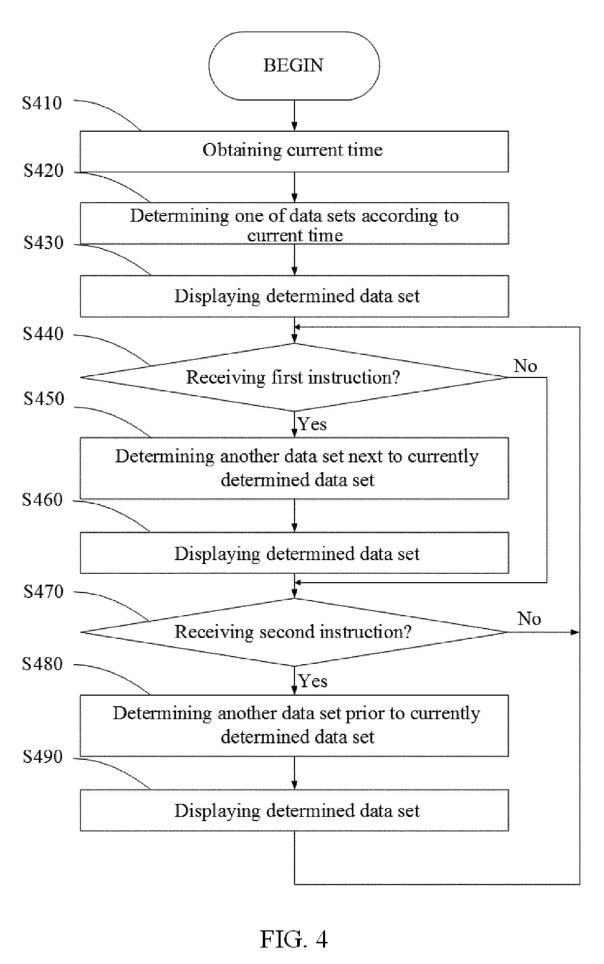

Fig. 4 is a flowchart of another embodiment of a time-associated data browsing method of the invention. The time-associated data browsing method of the invention can be used in an electronic device, such as a mobile phone, a smart phone, a PDA, a GPS, a notebook, a tablet computer, a wearable device, or other portable devices.

In step S410, the current time is obtained. Then, in step S420, a data set is determined from a plurality of data sets according to the current time, and in step S430, the content of the determined data set is displayed. As described, each data set is time-associated, and each data set includes time data and content. It is understood that, in some embodiments, the time data of the data set can be also displayed in the display unit with the content of the data set. It is understood that, in some embodiments, the content of the data set is scrolled in the display unit, such that the content of the data set is completely displayed in the display unit. It is noted that, in some embodiments, one of the data sets is displayed in the display unit at a time. It is understood that, in some embodiments, the time data of the determined data set is later than or close to the current time, and the time data of the determined data set is closest to the current time than other data sets.

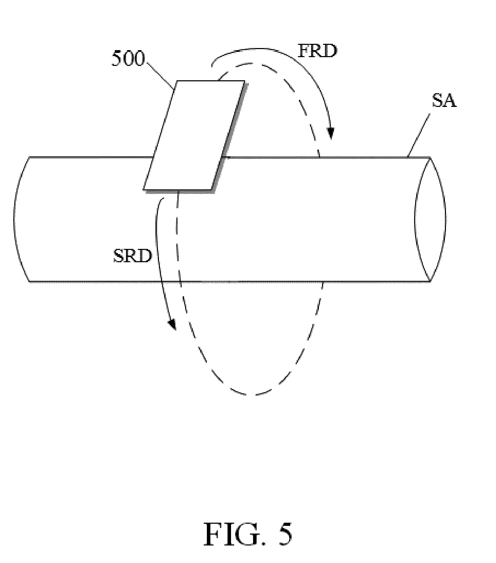

In step S440, it is determined whether a first instruction is received. It is noted that, the first instruction can be predefined in the electronic device. It is understood that, in some embodiments, the received first instruction can comprise an orientation, a movement of the electronic device, a tap on the electronic device, a sound, a trigger corresponding to a button, an appearance corresponding to an object, and/or a touch on a touch-sensitive device. It is understood that, in some embodiments, an orientation and/or a movement corresponding to the electronic device can be detected via at least one sensor. It is determined whether the orientation of the electronic device matches with or substantially matches with a specific orientation, or whether the movement of the electronic device matches with or substantially matches with a specific movement. When the orientation of the electronic device matches with or substantially matches with the specific orientation, or when the movement of the electronic device matches with or substantially matches with the specific movement, the first instruction is generated. Fig. 5 is a schematic diagram illustrating an example of an electronic device rotating around a specific axis. As shown in Fig. 5, an electronic device 500 can rotate in a first direction FRD such as a counterclockwise direction or in a second direction SRD such as a clockwise direction around a specific axis SA. For example, the electronic device 500 may be a wearable device worn on the arm of a user. It is understood that, the arm of the user may be the above specific axis. The user can twist the forearm to cause the electronic device to rotate clockwise or counterclockwise along with the forearm. When the electronic device is caused to rotate counterclockwise along with the forearm, the first instruction is generated. When the first instruction is not received (No in step S440), the procedure goes to step S470. When the first instruction is received (Yes in step S440), in step S450, in response to the first instruction, a data set next to the currently determined data set is determined from the data sets, and in step S460, the content of the determined data set is displayed. Similarly, in some embodiments, the time data of the data set can also be displayed in the display unit with the content of the data set. In some embodiments, the content of the data set scrolls across the display unit, such that the content of the data set is completely displayed in the display unit. In some embodiments, one of the data sets is displayed in the display unit at a time. It is understood that, in some embodiments, the time data of the data set determined in step S450 is later than the time data of the data set determined in step S420, and the time data of the data set determined in step S450 is closest to the time data of the data set determined in step S420 than that of the other data sets.

In step S470, it is determined whether a second instruction is received. Similarly, the second instruction can be predefined in the electronic device. In some embodiments, the received second instruction can comprise an orientation, a movement of the electronic device, a tap on the electronic device, a sound, a trigger corresponding to a button, an appearance corresponding to an object, and/or a touch on a touch-sensitive device. It is understood that, in some embodiments, an orientation and/or a movement corresponding to the electronic device can be detected via at least one sensor. It is determined whether the orientation of the electronic device matches with or substantially matches with a specific orientation, or whether the movement of the electronic device matches with or substantially matches with a specific movement. When the orientation of the electronic device matches with or substantially matches with the specific orientation, or when the movement of the electronic device matches with or substantially matches with the specific movement, the second instruction is generated. It is understood that, in some embodiments, the movement indicates that the electronic device substantially rotates in a second direction around a specific axis. For example, when the electronic device is caused to rotate clockwise along with the forearm, the second instruction is generated. When the second instruction is not received (No in step S470), the procedure goes to step S440. When the second instruction is received (Yes in step S470), in step S480, in response to the second instruction, a data set prior to the currently determined data set is determined from the data sets, and in step S490, the content of the determined data set is displayed. Similarly, in some embodiments, the time data of the data set can also be displayed in the display unit with the content of the data set. In some embodiments, the content of the data set scrolls across the display unit, such that the content of the data set is completely displayed in the display unit. In some embodiments, one of the data sets is displayed in the display unit at a time. It is understood that, in some embodiments, the time data of the data set determined in step S480 is prior to the time data of the data set determined in step S450, and the time data of the data set determined in step S480 is closest to the time data of the data set determined in step S450 than that of the other data sets.

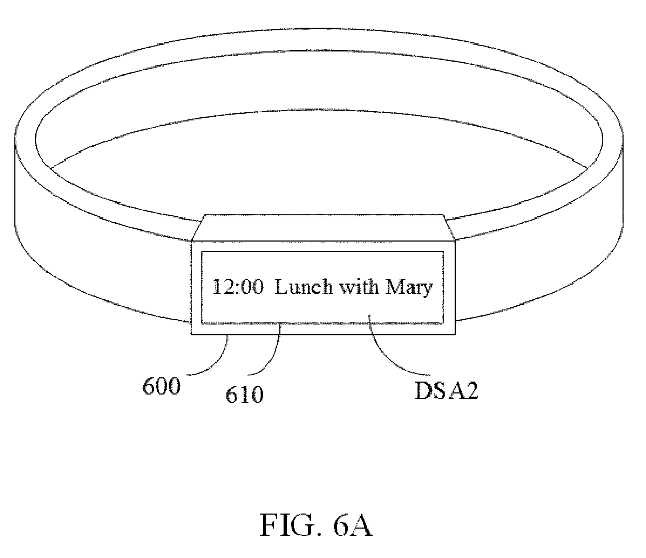

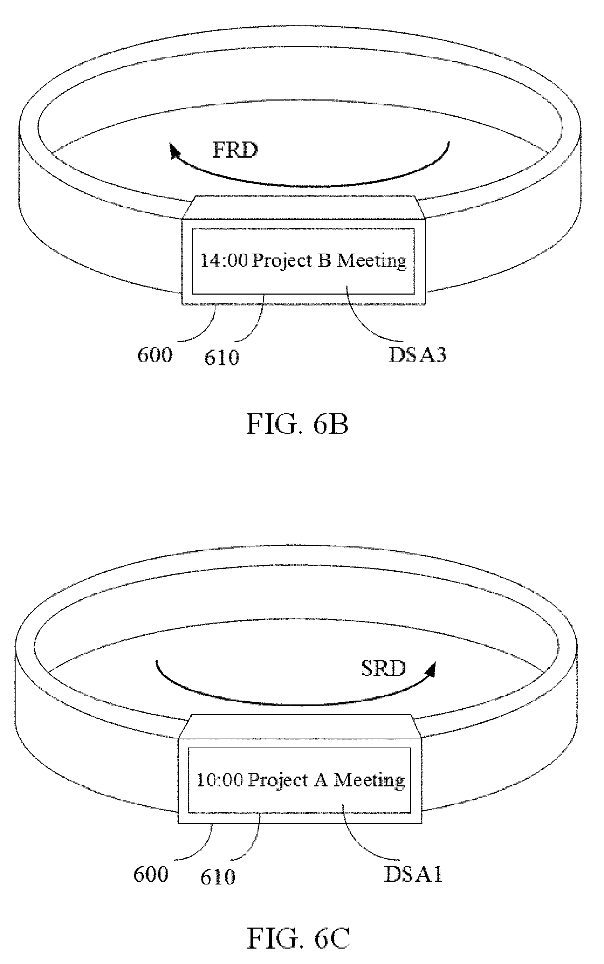

Figs. 6A, 6B and 6C are schematic diagrams illustrating an embodiment of an example for time-associated data browsing of the invention. The current time of an electronic device 600 is 11:50. The data set DSA2 can be determined from the calendar data in Fig. 2A by the electronic device 600 according to the current time, and the data set DSA2 is displayed in a display unit 610, as shown in Fig. 6A. When the electronic device 600 rotates counterclockwise, the data set DSA3 next to the data set DSA2 is determined, and displayed in the display unit 610, as shown in Fig. 6B. When the electronic device 600 rotates clockwise, the data set DSA1 prior to the data set DSA2 is determined, and displayed in the display unit 610, as shown in Fig. 6C. It is noted that, after the data set DSA3 is determined and displayed in the display unit 610, the data set DSA2 is determined and displayed in the display unit 610 when the electronic device 600 rotates clockwise.

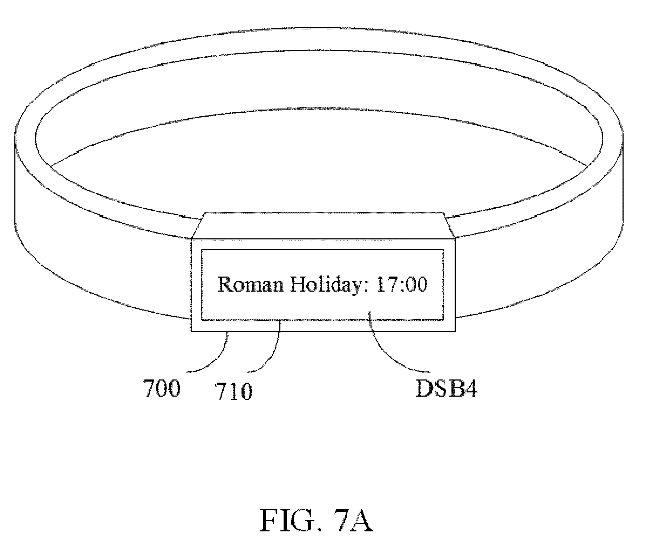

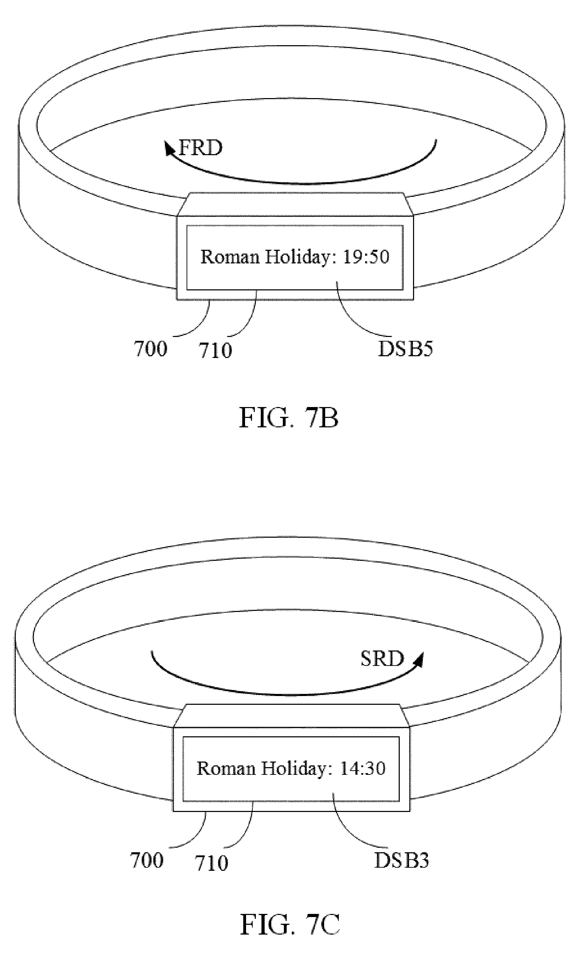

Figs. 7A, 7B and 7C are schematic diagrams illustrating an embodiment of another example for time-associated data browsing of the invention. The current time of an electronic device 700 is 16:30. The data set DSB4 can be determined from the showing time data in Fig. 2B by the electronic device 700 according to the current time, and the data set DSB4 is displayed in a display unit 710, as shown in Fig. 7A. When the electronic device 700 rotates counterclockwise, the data set DSB5 next to the data set DSB4 is determined, and displayed in the display unit 710, as shown in Fig. 7B. When the electronic device 700 rotates clockwise, the data set DSB3 prior to the data set DSB4 is determined, and displayed in the display unit 710, as shown in Fig. 7C. It is noted that, after the data set DSB5 is determined and displayed in the display unit 710, the data set DSB4 is determined and displayed in the display unit 710 when the electronic device 700 rotates clockwise.

It is understood that, only two directions, such as the clockwise and the counterclockwise directions are disclosed in the above examples. However, in some embodiments, a third direction and a fourth direction can be further defined. In some embodiments, the third direction and/or the fourth direction can be vertical to the first direction. When the electronic device rotates in the third direction or the fourth direction, data sets corresponding to different applications or classifications can be determined by the electronic device. For example, data browsing for bus schedule data can be currently performed in an electronic device. When the electronic device moves in a specific direction other than the clockwise and the counterclockwise directions, a change occurs so that data browsing for calendar data can be performed in the electronic device.

Therefore, the time-associated data browsing methods and systems of the present invention can browse and switch data sets with time-associations in an electronic device according to the current time, thereby increasing the convenience and efficiency for data browsing.

Time-associated data browsing methods may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A time-associated data browsing method for use in an electronic device (600, 700), comprising:
obtaining a current time;
determining a first data set from a plurality of data sets according to the current time, wherein each data set includes time data and content;
displaying the content of the first data set via a display unit (610, 710) of the electronic device (600, 700);
receiving a first instruction;
in response to the first instruction, determining a second data set from the data sets; and
displaying the content of the second data set via the display unit (610, 710)of the electronic device (600, 700).

2. The method of claim 1, wherein the time data of the first data set is later than the current time, the time data of the second data set is later than the time data of the first data set, the time data of the first data set is closest to the current time than other data sets, and the time data of the second data set is closest to the time data of the first data set than other data sets.

3. The method of claim 2, further comprising:
detecting an orientation of the electronic device by at least one sensor;
determining whether the orientation of the electronic device (600, 700) matches with or substantially matches with a specific orientation; and
when the orientation of the electronic device (600, 700) matches with or substantially matches with the specific orientation, generating the first instruction.

4. The method of claim 2, further comprising:
detecting a movement of the electronic device (600, 700) by at least one sensor;
determining whether the movement of the electronic device (600, 700) matches with or substantially matches with a specific movement; and
when the movement of the electronic device (600, 700) matches with or substantially matches with the specific movement, generating the first instruction.

5. The method of claim 4, wherein the movement indicates that the electronic device (600, 700) substantially rotates in a first direction around a specific axis.

6. The method of claim 5, further comprising:
receiving a second instruction, wherein the second instruction is generated when the electronic device (600, 700) substantially rotates in a second direction around the specific axis;
in response to the second instruction, changing the determined data set from the second data set to the first data set; and
displaying the content of the first data set via the display unit (610, 710) of the electronic device (600, 700).

7. The method of claim 1, 2, 3, 4, 5 or 6, wherein the data sets record calendar data, weather data, or shift table data corresponding to at least one specific date.

8. The method of claim 1, 2, 3, 4, 5, 6 or 7, wherein one of the data sets is displayed in the display unit at a time.

9. The method of claim 1, 2, 3, 4, 5, 6, 7 or 8, wherein the content of the second data set scrolls across the display unit (610, 710), such that the content of the second data set is completely displayed in the display unit (610, 710).

10. A time-associated data browsing system (100) for use in an electronic device (500), comprising:
a display unit (110); and
a processing unit (130) obtaining a current time, determining a first data set from a plurality of data sets according to the current time, wherein each data set includes time data and content, displaying the content of the first data set via the display unit (110), receiving a first instruction, in response to the first instruction, determining a second data set from the data sets, and displaying the content of the second data set via the display unit (110).

11. A machine-readable storage medium comprising a computer program, which, when executed, causes a device to perform a time-associated data browsing method, wherein the method comprises:
obtaining a current time;
determining a first data set from a plurality of data sets according to the current time, wherein each data set includes time data and content;
displaying the content of the first data set via a display unit (610, 710) of the electronic device (600, 700);
receiving a first instruction;
in response to the first instruction, determining a second data set from the data sets; and
displaying the content of the second data set via the display unit (610, 710) of the electronic device (600, 700).
